# EUROPÄISCHE PATENTSCHRIFT

(11) **EP 1 437 605 B1**
(45) Veröffentlichungstag und Bekanntmachung des Hinweises auf die Patenterteilung: **20.08.2014**
(21) Anmeldenummer: 04009357.7
(22) Anmeldetag: 03.05.2001
(51) Int. Cl.: G01V 8/20, F16P 3/14

(54) **Lichtgitter**
Light grid
Grille de lumière

(30) Priorität: 07.07.2000 DE 10033077
(43) Veröffentlichungstag der Anmeldung: 14.07.2004
(62) Teilanmeldung aus: 01110767.9
(73) Patentinhaber: SICK AG, 79183 Waldkirch (DE)
(72) Erfinder: Jürs, Heiner, 79183 Waldkirch (DE); Görnemann, Otto, 41564 Kaarst (DE)
(74) Vertreter: Manitz, Finsterwald & Partner GbR

(56) Entgegenhaltungen:
- EP-A- 0 567 717
- DE-A- 19 918 921
- DE-C- 19 510 304
- US-A- 5 583 334
- US-A- 5 900 598

## Beschreibung

Die Erfindung betrifft ein Lichtgitter zur Erfassung von Objekten in einem Überwachungsbereich mit einer mehrere Lichtsender umfassenden Sendeeinheit und einer mehrere Lichtempfänger umfassenden Empfangseinheit, bei dem in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktivierbar sind. Ferner betrifft die Erfindung ein Verfahren zum Betrieb eines derartigen Lichtgitters.

Lichtgitter der genannten Art finden beispielsweise in hoch automatisierten Fertigungssystemen Anwendung, bei denen Werkstücke automatisch zugeführt, bearbeitet und wieder abgeführt werden. Diese Fertigungssysteme sind in der Regel mit vollautomatischen Bearbeitungszentren (z.B. Robotereinrichtungen) und Transporteinrichtungen versehen. Da die Zuführ-, Bearbeitungs- und Wegführbereiche zugleich mögliche Gefahrenbereiche beispielsweise für Bedienungspersonal darstellen, ist es bei solchen Systemen erforderlich, einen Schutz vor unzulässigem Eindringen vorzusehen. Ein solcher Schutz kann mittels Lichtgittern der eingangs erwähnten Art erreicht werden.

Da zum Betrieb eines Lichtgitters ein zwischen Lichtsender und Lichtempfänger synchroner Betrieb erforderlich ist, ist es bei Lichtgittern nach dem Stand der Technik üblich, beispielsweise vom ersten Lichtsender der Sendeeinheit ein mit einem ersten Überwachungssignal gekoppeltes Synchronisationssignal in Richtung des ersten Lichtempfängers der Empfangseinheit auszusenden, um diese zu aktivieren. Im Anschluß an diesen Synchronisationsvorgang werden dann nach einem vorgegebenen Zeitschema nacheinander alle weiteren Paare aus einander zugeordneten Lichtsendern und Lichtempfängern aktiviert, um so die gewünschte Überwachungsfunktion zu realisieren. Nachteilig an dieser Vorgehensweise ist, daß immer dann, wenn das Synchronisationssignal beispielsweise durch ein in den Überwachungsbereich einfahrendes Werkstück unterbrochen wird, keine Synchronisierung zwischen Sende- und Empfangseinheit erfolgen kann und somit der Betrieb des Lichtgitters unterbrochen ist. Es ist daher übliche Praxis, Lichtgitter für beispielsweise die Zeit des Ein- und Ausfahrens eines Objektes zu deaktivieren, wodurch auf nachteilige Weise in dieser Zeit kein Schutz gegen unzulässiges Eindringen besteht.

Aus der DE 199 18 921 A1 ist eine optische Schranke mit Sende- und Empfangselementen bekannt, die in jedem Teil der Schranke auf Module aufgeteilt sind. Die Module tauschen codierte Wörter aus, die sie gegenseitig identifizieren; die Synchronisation geschieht durch die Übereinstimmung zwischen dem ausgesandten Wort und dem zu empfangenden Wort.

Aufgabe der Erfindung ist es, ein Verfahren zum Betrieb eines Lichtgitters und ein Lichtgitter zu schaffen, das in möglichst allen Überwachungssituationen eine sichere und zuverlässige Synchronisierung zwischen Sendeeinheit und Empfangseinheit zuläßt, robust im Betrieb und einfach herzustellen ist.

Diese Aufgabe wird durch ein Verfahren gemäß den Merkmalen von Anspruch 1 und durch eine Vorrichtung gemäß den Merkmalen von Anspruch 7 gelöst.

Mit diesem Verfahren wird gewährleistet, daß für die Übertragung des Synchronisationssignals mehrere alternative, im Überwachungsbereich liegende Übertragungswege zur Verfügung stehen. So kann durch eine an die jeweilige Überwachungssituation angepaßte Auswahl des für die Übertragung des Synchronisationssignals zuständigen Lichtsender-/empfängerpaares eine sichere und zuverlässige Synchronisierung auch dann sichergestellt werden, wenn sich ein Objekt im Überwachungsbereich befindet. Man wird dementsprechend immer einen solchen, zwischen einem Lichtsender-/empfängerpaar ausgebildeten Übertragungsweg für das Synchronisationssignal wählen, der gerade nicht durch ein Objekt unterbrochen ist.

Durch den erfindungsgemäßen Wechsel des für die Synchronisierung zuständigen Lichtsender-/empfängerpaares wird es somit möglich, ein Objekt beispielsweise durch den gesamten Überwachungsbereich des Lichtgitters zu bewegen, wobei der Lichtweg zwischen allen einander zugeordneten Lichtsendern und Lichtempfängern zumindest einmal unterbrochen wird, da immer ein gerade nicht unterbrochener Lichtweg für die Übertragung des Synchronisationssignals genutzt werden kann.

Besonders vorteilhaft ist es, wenn immer dann, wenn die Übertragung des Synchronisationssignals zwischen einem ersten Paar von Lichtsender und Lichtempfänger unterbrochen ist oder eine solche Unterbrechung bevorsteht, eine Übertragung des Synchronisationssignals zwischen einem zweiten Paar von Lichtsender und Lichtempfänger erfolgt. Dieser Wechsel kann nach einem fest programmierten Schema, nach einem Steuereingriff durch eine Bedienperson oder individuell automatisiert in Abhängigkeit von konkret detektierten Objektbewegungen erfolgen. Wenn also z.B. eine Bewegung eines Objekts in Richtung des gerade für die Übertragung des Synchronisationssignals zuständigen Lichtweges festgestellt wird, kann ein anderer Lichtweg für die Übertragung des Synchronisationssignals ausgewählt werden, der bereits von dem betreffenden Objekt passiert wurde.
Zweckmäßigerweise besteht ein erstes für die Synchronisierung zuständige Paar aus dem ersten bzw. letzten Lichtsender der Sendeeinheit und dem ersten bzw. letzten Lichtempfänger der Empfangseinheit und / oder ein zweites für die Synchronisierung zuständige Paar aus dem letzten bzw. ersten Lichtsender der Sendeeinheit und dem letzten bzw. ersten Lichtempfänger der Empfangseinheit. Dabei sind auch andere Paarauswahlen möglich, wobei ein Umschalten des Übertragungsweges des Synchronisationssignals zwischen möglichst weit voneinander beabstandeten Paaren erfolgen sollte. So ist es, wenn beispielsweise ein Objekt dem Überwachungsbereich zugeführt wird und damit die im Objekteintrittsbereich liegenden Übertragungswege blockiert werden, sinnvoll, daß derjenige Synchronisationssignal-Übertragungsweg, auf den umgeschaltet wird, außerhalb dieses Eintrittsbereichs liegt, um einen sicheren Übertragungsweg für das Synchronisationssignal zu gewährleisten.

Bei einer vorteilhaften Ausführungsform wird vom Lichtgitter ein Schalt- oder Warnsignal nur dann abgegeben, wenn eine vorbestimmte Mindestanzahl von einander benachbarten Lichtempfängern keinen Empfang melden und ein im Überwachungsbereich befindliches Objekt somit eine vorbestimmte Mindestgröße überschreitet. Dabei kann diese Mindestanzahl der Lichtempfänger, die erforderlich ist, um im Falle einer Blockierung des Übertragungsweges die Anwesenheit eines unzulässigen Objektes anzuzeigen, in Abhängigkeit von der jeweiligen Überwachungssituation einer Kontrolleinheit einprogrammiert oder eingelernt werden.

Besonders vorteilhaft ist es, wenn auch ein die vorbestimmte Mindestgröße nicht überschreitendes Objekt im Überwachungsbereich erfaßt wird und in Abhängigkeit von der Position und / oder der Bewegungsrichtung eines solchen Objektes ein Wechsel des für die Übertragung des Synchronisationssignals verantwortliches Paares von Lichtsender und Lichtempfänger erfolgt. Dies bedeutet, daß in jedem Fall ein in den Überwachungsbereich eintretendes Objekt und zwar sowohl dessen Lage als auch dessen Bewegungsrichtung durch das Lichtgitter bzw. dessen Kontrolleinheit erfaßt und in Abhängigkeit von dieser Information ein geeigneter Übertragungsweg für das Synchronisationssignal gewählt wird. Eine derartige Umschaltung zwischen den verschiedenen Übertragungswegen kann mittels der Kontrolleinheit erfolgen.

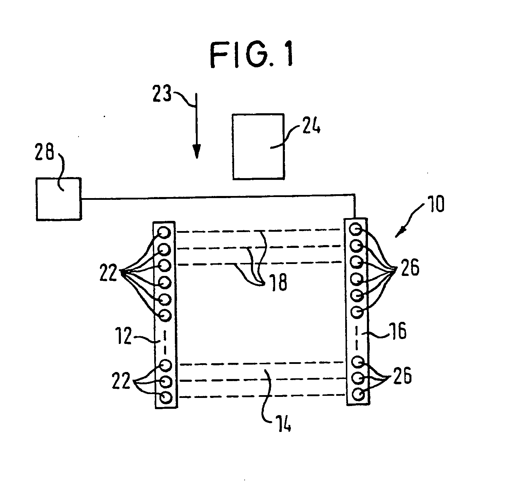

Die Erfindung wird im Folgenden beispielhaft anhand eines Ausführungsbeispiels unter Bezugnahme auf die Zeichnung beschrieben; in dieser zeigt
- Fig. 1: eine schematische Ansicht eines Lichtgitters gemäß einer Ausführungsform der Erfindung.

Bei einer Ausführungsform der vorliegenden Erfindung ist gemäß Fig. 1 ein Lichtgitter 10 mit einer Sendeeinheit 12, einem Überwachungsbereich 14 und einer Empfangseinheit 16 vorgesehen. Dabei umfaßt die Sendeeinheit 12 mehrere Lichtsender 22 und die Empfangseinheit 16 umfaßt mehrere Lichtempfänger 26. Zusätzlich ist noch eine Kontrolleinheit 28 vorgesehen, die mit der Empfangseinheit 16 in Verbindung steht oder alternativ auch in die Empfangseinheit 16 integriert sein kann.
Die Lichtsender 22 der Sendeeinheit 12 werden während des Betriebs des Lichtgitters 10 kontinuierlich durchgetaktet, so daß keine intelligente Ansteuerung der Sendeeinheit über die Kontrolleinheit 28 erforderlich ist. Somit ist auf vorteilhafte Weise keine Verbindung zwischen Sende- und Empfangseinheit 12, 16 über elektrische oder optische Leitungen nötig. Alternativ können jedoch auch Sende- und Empfangseinheit 12, 16 über die Kontrolleinheit 28 angesteuert werden (nicht dargestellt).

Die Kontrolleinheit 28 dient u. a. dazu, das Lichtgitter 10 zu aktivieren, Empfangsdaten von der Empfangseinheit 16 auszuwerten, sowie dazu, die Wahl eines geeignete Übertragungsweges 18 für das Synchronisationssignal zu veranlassen.

Wenn gemäß Fig. 1 ein zu bearbeitendes Objekt 24 beispielsweise in einer Objektzuführrichtung 22 in den Überwachungsbereich 14 bewegt wird, werden wiederum nacheinander alle Übertragungswege 18 zur Übertragung von Überwachungs- oder Synchronisationssignalen nacheinander unterbrochen. Da in diesem Zustand die Empfangseinheit 16 ein von der Sendeeinheit 12 ausgesandtes Synchronisationssignal nicht empfangen kann, wenn die Übertragung über einen von dem Objekt unterbrochenen Übertragungsweg 18 erfolgen soll, weist die Kontrolleinheit 28 die Empfangseinheit 16 an, das Synchronisationssignal über einen Übertragungsweg zu empfangen, der von dem Objekt 24 gerade nicht unterbrochen ist. Auf diese Art und Weise kann alternativ zu der ersten Ausführungsform durch ein geeignetes Wechseln des Übertragungsweges für das Synchronisationssignal eine Unterbrechung des Übertragungsweges 18 für das Synchronisationssignal vermieden werden.

## Patentansprüche

1. Verfahren zum Betrieb eines Lichtgitters zur Erfassung von Objekten in einem Überwachungsbereich, bei dem Lichtsignale von einer mehrere Lichtsender umfassenden Sendeeinheit zu einer mehrere Lichtempfänger umfassenden Empfangseinheit übertragen werden, wobei in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktiviert werden, wobei das Synchronisationssignal während des Betriebes über wechselnde Paare von einander zugeordneten Lichtsendern (22) und Lichtempfängern (26) von der Sendeeinheit (12) zur Empfangseinheit (16) übertragen wird,
**dadurch gekennzeichnet,**
**daß** ein bestimmtes Paar von einander zugeordneten Lichtsendern (22) und Lichtempfängern (26) zur Übertragung des Synchronisationssignals ausgewählt wird, dessen Übertragungsweg zum Zeitpunkt der Übertragung des Synchronisationssignals nicht unterbrochen ist.

2. Verfahren nach Anspruch 2,
**dadurch gekennzeichnet,**
**daß** dann, wenn die Übertragung des Synchronisationssignal zwischen einem ersten Paar von Lichtsender (22) und Lichtempfänger (26) unterbrochen ist oder eine solche Unterbrechung bevorsteht, eine Übertragung des Synchronisationssignals zwischen einem zweiten Paar von Lichtsender (22) und Lichtempfänger (26) erfolgt.

3. Verfahren nach einem der Ansprüche 1 oder 2,
**dadurch gekennzeichnet,**
**daß** das erste Paar aus dem ersten bzw. letzten Lichtsender (22) der Sendeeinheit (12) und dem ersten bzw. letzten Lichtempfänger (26) der Empfangseinheit (16) besteht, und / oder
**daß** das zweite Paar aus dem letzten bzw. ersten Lichtsender (22) der Sendeeinheit (12) und dem letzten bzw. ersten Lichtempfänger (26) der Empfangseinheit (16) besteht.

4. Verfahren nach einem der Ansprüche 1 bis 3,
**dadurch gekennzeichnet,**
**daß** ein Schalt- oder Warnsignal nur dann abgegeben wird, wenn eine vorbestimmte Mindestanzahl von einander benachbarten Lichtempfängern (26) keinen Empfang melden und ein im Überwachungsbereich (14) befindliches Objekt (24) somit eine vorbestimmte Mindestgröße überschreitet.

5. Verfahren nach Anspruch 4,
**dadurch gekennzeichnet,**
**daß** auch ein die vorbestimmte Mindestgröße nicht überschreitendes Objekt (24) im Überwachungsbereich (14) erfaßt wird und in Abhängigkeit von der Position und / oder der Bewegungsrichtung eines solchen Objektes (24) ein Wechsel des für die Übertragung des Synchronisationssignals verantwortliches Paares von Lichtsender (22) und Lichtempfänger (26) erfolgt.

6. Verfahren nach einem der Ansprüche 1 bis 5,
**dadurch gekennzeichnet,**
**daß** in Abhängigkeit einer festgelegten oder ermittelten Objekteintrittsrichtung in den Überwachungsbereich (14) die Übertragung des Synchronisationssignal über ein erstes oder zweites Paar von Lichtsender (22) und Lichtempfänger (26) erfolgt.

7. Lichtgitter zur Erfassung von Objekten in einem Überwachungsbereich mit einer mehrere Lichtsender umfassenden Sendeeinheit und einer mehrere Lichtempfänger umfassenden Empfangseinheit, bei dem in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktivierbar sind, wobei eine Kontrolleinheit (28) zur Übertragung des Synchronisationssignals über wechselnde Paare von einander zugeordneten Lichtsendern (22) und Lichtempfängern (26) von der Sendeeinheit (12) zur Empfangseinheit (16) vorgesehen ist,
**dadurch gekennzeichnet,**
**daß** die Kontrolleinheit (28) zur Auswahl eines bestimmten Paares von einander zugeordneten Lichtsendern (22) und Lichtempfängern (26) zur Übertragung des Synchronisationssignals ausgebildet ist, dessen Übertragungsweg zum Zeitpunkt der Übertragung des Synchronisationssignals nicht unterbrochen ist.

8. Lichtgitter nach Anspruch 7,
**dadurch gekennzeichnet,**
**daß** die Kontrolleinheit (28) zur Ausführung der Verfahren gemäß einem der Ansprüche 1 bis 6 ausgelegt ist.

## Claims

1. A method of operating a light grid for detecting objects in a monitored zone, wherein light signals are transmitted from a transmission unit comprising a plurality of light transmitters to a reception unit comprising a plurality of light receivers, wherein respective pairs of mutually associated light transmitters and light receivers which bound the monitored zone are activated successively in time in dependence on a synchronisation signal transmitted between the transmission unit and the reception unit, and wherein the synchronisation signal is transmitted from the transmission unit (12) to the reception unit (16) during the operation via alternating pairs of mutually associated light transmitters (22) and light receivers (26),
**characterised in that**
a specific pair of mutually associated light transmitters (22) and light receivers (26) whose transmission path is not interrupted at the time of the transmission of the synchronisation signal is selected for the transmission of the synchronisation signal.

2. A method in accordance with claim 2,
**characterised in that**
a transmission of the synchronisation signal takes place between a second pair of light transmitter (22) and light receiver (26) when the transmission of the synchronisation signal between a first pair of light transmitter (22) and light receiver (26) is interrupted or when such an interruption is impending.

3. A method in accordance with one of the claims 1 or 2,
**characterised in that**
the first pair comprises the first or last light transmitter (22) of the transmission unit (12) and the first or last light receiver (26) of the reception unit (16); and/or
**in that** the second pair comprises the last or first light transmitter (22) of the transmission unit (12) and the last or first light receiver (26) of the reception unit (16).

4. A method in accordance with any one of the claims 1 to 3,
**characterised in that**
a switch signal or a warning signal is only output when a predefined minimum number of mutually adjacent light receivers (26) do not report any reception and an object (14) located in the monitored zone (14) thus exceeds a predefined minimum size.

5. A method in accordance with claim 4,
**characterised in that**
an object (24) which does not exceed the predefined minimum size is also detected in the monitored zone (14) and a change of the pair of light transmitter (22) and light receiver (26) responsible for the transmission of the synchronisation signal takes place in dependence on the position and/or on the direction of movement of such an object (24).

6. A method in accordance with any one of the claims 1 to 5,
**characterised in that**
the transmission of the synchronisation signal takes place via a first or second pair of light transmitter (22) and light receiver (26) in dependence on a fixed or determined direction of entry of the object into the monitored zone (14).

7. A light grid for detecting objects in a monitored zone using a transmission unit comprising a plurality of light transmitters and a reception unit comprising a plurality of light receivers, wherein respective pairs of mutually associated light transmitters and light receivers which bound the monitored zone can be activated successively in time in dependence on a synchronisation signal transmitted between the transmission unit and the reception unit, and wherein a monitoring unit (28) is provided for transmitting the synchronisation signal from the transmitter unit (12) to the reception unit (16) via alternating pairs of mutually associated light transmitters (22) and light receivers (26),
**characterised in that**
the control unit (28) is configured for selecting a specific pair of mutually associated light transmitters (22) and light receivers (26) for transmitting the synchronisation signal whose transmission path is not interrupted at the time of the transmission of the synchronisation signal.

8. A light grid in accordance with claim 7,
**characterised in that**
the monitoring unit (28) is adapted for carrying out the methods in accordance with any one of the claims 1 to 6.

## Revendications

1. Procédé pour le fonctionnement d'une trame lumineuse pour détecter des objets dans une zone surveillée, dans lequel on transmet des signaux lumineux depuis une unité émettrice qui comprend plusieurs émetteurs de lumière vers une unité réceptrice qui comprend plusieurs récepteurs de lumière, dans lequel, en fonction d'un signal de synchronisation transmis entre unité émettrice et unité réceptrice, on active temporellement les unes après les autres des paires respectives d'émetteurs de lumière et de récepteurs de lumière associés les uns aux autres et délimitant la zone surveillée,
dans lequel le signal de synchronisation est transmis de l'unité émettrice (12) à l'unité réceptrice (16) pendant le fonctionnement via des paires alternantes d'émetteurs de lumière (22) et de récepteurs de lumière (26) associé les uns aux autres,
**caractérisé en ce que**
on sélectionne pour la transmission du signal de synchronisation une paire déterminée d'émetteur de lumière (22) et de récepteur de lumière (26) associés l'un à l'autre, dont le trajet de transmission n'est pas interrompue à l'instant de la transmission du signal de synchronisation.

2. Procédé selon la revendication 2,
**caractérisé en ce que** lorsque la transmission du signal de synchronisation est interrompu entre une première paire formée d'un émetteur de lumière (22) et d'un récepteur de lumière (26), ou qu'une telle interruption est imminente, une transmission du signal de synchronisation a lieu entre une seconde paire formée d'un émetteur de lumière (22) et d'un récepteur de lumière (26).

3. Procédé selon l'une des revendications 1 ou 2,
**caractérisé en ce que**
la première paire est constituée du premier ou du dernier émetteur de lumière (22) de l'unité émettrice (12) et du premier ou du dernier récepteur de lumière (26) de l'unité réceptrice (16), et/ou **en ce que** la seconde paire est constituée du dernier ou du premier émetteur de lumière (22) de l'unité émettrice (12) et du dernier ou du premier récepteur de lumière (26) de l'unité réceptrice (16).

4. Procédé selon l'une des revendications 1 à 3,
**caractérisé en ce que** l'on délivre un signal de commutation ou d'avertissement quand un nombre minimum prédéterminé de récepteurs de lumière voisins les uns des autres (26) annoncent qu'il n'y a pas de réception et qu'un objet (24) qui se trouve dans la zone surveillée (14) a par conséquent une taille qui dépasse une taille minimum prédéterminé.

5. Procédé selon la revendication 4,
**caractérisé en ce qu'**un objet (24) dont la taille ne dépasse pas la taille minimum prédéterminée est également détecté dans la zone surveillée (14) et **en ce que**, en fonction de la position et/ou de la direction de déplacement d'un tel objet (24), on procède à un changement de la paire émetteur de lumière (22)/récepteur de lumière (26) responsable pour la transmission du signal de synchronisation.

6. Procédé selon l'une des revendications 1 à 5,
**caractérisé en ce que**, en fonction d'une direction d'entrée, fixée ou déterminée, d'un objet dans la zone surveillée (14), la transmission du signal de synchronisation a lieu via une première ou une seconde paire émetteur de lumière (22)/récepteur de lumière (26).

7. Trame lumineuse pour détecter des objets dans une zone surveillée, comprenant une unité émettrice qui comporte plusieurs émetteurs de lumière, et une unité réceptrice qui comporte plusieurs récepteurs de lumière, dans laquelle, en fonction d'un signal de synchronisation transmis entre unité émettrice et unité réceptrice, des paires respectives d'émetteurs de lumière et de récepteurs de lumière associés l'un à l'autre et délimitant la zone surveillée peuvent être activées temporellement les unes après les autres,
dans laquelle il est prévu une unité de contrôle (28) pour la transmission du signal de synchronisation via des paires alternantes d'émetteurs de lumière (22) et de récepteurs de lumière (26) associés l'un à l'autre, de l'unité émettrice (12) vers l'unité réceptrice (16),
**caractérisée en ce que**, pour la transmission du signal de synchronisation, l'unité de contrôle (28) est réalisée en vue de sélectionner une paire déterminée d'émetteurs de lumière (22) et de récepteurs de lumière (26) associés l'un à l'autre dont le trajet de transmission n'est pas interrompu à l'instant de la transmission du signal de synchronisation.

8. Trame lumineuse selon la revendication 7,
**caractérisée en ce que** l'unité de contrôle (28) est conçue pour la mise en oeuvre du procédé selon l'une des revendications 1 à 6.
